(19) Europäisches Patentamt
European Patent Office
Office européen des brevets

(11) **EP 4 692 839 A1**

(12) **EUROPEAN PATENT APPLICATION**
published in accordance with Art. 153(4) EPC

(43) Date of publication:
**11.02.2026 Bulletin 2026/07**

(21) Application number: **23929867.2**

(22) Date of filing: **28.09.2023**

(51) International Patent Classification (IPC):
*G01S 7/41* *(2006.01)*

(52) Cooperative Patent Classification (CPC):
Y02A 90/10

(86) International application number:
**PCT/CN2023/122508**

(87) International publication number:
**WO 2024/198293 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2023 CN 202310331724**

(71) Applicant: **Huizhou Desay SV Automotive Co.,
Ltd.**
**Huizhou, Guangdong 516006 (CN)**

(72) Inventors:
• YAN, Yuanpeng
  Huizhou, Guangdong 516006 (CN)
• LU, Qin
  Huizhou, Guangdong 516006 (CN)
• XU, Tian
  Huizhou, Guangdong 516006 (CN)
• TANG, Kai
  Huizhou, Guangdong 516006 (CN)

(74) Representative: **Perronace, Andrea et al**
**Jacobacci & Partners S.p.A.**
**Via Tomacelli, 146**
**00186 Roma (IT)**

(54) **METHOD AND APPARATUS FOR RADAR OBJECT IDENTIFICATION, DEVICE AND STORAGE MEDIUM**

(57)     Provided are a method and an apparatus for identifying a radar target, a device, and a storage medium. The method includes acquiring radar data of at least one identification point; determining an algorithm parameter corresponding to each identification point according to the radar data of the at least one identification point; and determining, according to the algorithm parameter and in combination with a set algorithm, an identified radar target according to an algorithm output result.

The method for identifying a radar target provided by the present application solves the problem of target merging or splitting caused by fixed algorithm parameters in the related art by adaptively adjusting the size of algorithm parameters according to the radar data of identification points. The method can be applied to the identification of targets of different types and sizes, thereby improving the accuracy of target identification.

```
┌─────────────────────────────────────────────────────────┐
│  Acquire radar data of at least one identification point │  S110
└─────────────────────────────────────────────────────────┘
                            │
                            ▼
┌─────────────────────────────────────────────────────────┐
│  Determine an algorithm parameter corresponding to each  │
│  identification point according to the radar data of the │  S120
│  at least one identification point                       │
└─────────────────────────────────────────────────────────┘
                            │
                            ▼
┌─────────────────────────────────────────────────────────┐
│  Determine, according to the algorithm parameter and in  │
│  combination with a set algorithm, an identified radar   │  S130
│  target according to the algorithm output result         │
└─────────────────────────────────────────────────────────┘
```

**FIG. 1**

# Description

This application claims priority to Chinese Patent Application No. 202310331724.3 filed with the China National Intellectual Property Administration (CNIPA) on Mar. 30, 2023, the disclosure of which is incorporated herein by reference in its entirety.

## TECHNICAL FIELD

The present application relates to the field of intelligent vehicle technology, in particular, a method and an apparatus for identifying a radar target, a device, and a storage medium.

## BACKGROUND

With the continuous development of autonomous driving technology, millimeter-wave radar is increasingly applied in the field of assisted driving. Millimeter-wave radar may determine the state of a target by acquiring radar data reflected by the target. However, a target usually has multiple reflection points, and it is necessary to distinguish and divide the identified multiple reflection points during target identification.

In the related art, a cluster algorithm is generally used to process the reflected radar data. The cluster algorithm needs to pre-set the neighborhood radius for clustering point trace data and the minimum number of identification points within a range defined by the radius, that is, a density threshold. However, the reflection areas and reflection points of different targets are different. When the neighborhood radius and density threshold are set too large, it is easy to merge multiple adjacent targets into one target. When the neighborhood radius and density threshold are set too small, the same target may be split into multiple targets.

## SUMMARY

The present application provides a method and an apparatus for identifying a radar target, a device, and a storage medium to achieve accurate identification of radar targets.

According to an aspect of the present application, a method for identifying a radar target is provided. The method includes the steps below.

Radar data of at least one identification point is acquired.

An algorithm parameter corresponding to each identification point of the at least one identification point is determined according to the radar data of the at least one identification point.

According to the algorithm parameter and in combination with a set algorithm, an identified radar target is determined according to an algorithm output result.

Further, the radar data includes an amplitude and a detection distance.

Further, determining the algorithm parameter corresponding to the each identification point according to the radar data of the at least one identification point includes the following:

A first coefficient and a second coefficient that correspond to the each identification point are determined according to the amplitude and the detection distance of the at least one identification point.

An initial parameter value corresponding to the algorithm parameter is acquired.

The sum of the product of the first coefficient and the initial parameter value and the product of the second coefficient and the initial parameter value is determined as the algorithm parameter corresponding to the each identification point.

Further, determining the first coefficient and the second coefficient that correspond to the each identification point according to the amplitude and the detection distance of the at least one identification point includes the following:

For the each identification point, an amplitude and a detection distance that correspond to the each identification point are determined.

The maximum amplitude and the minimum amplitude among amplitudes of the at least one identification point are determined, and the first coefficient is determined according to the amplitude corresponding to the each identification point, the maximum amplitude, and the minimum amplitude.

The product of the detection distance that corresponds to the each identification point and a set scaling factor is determined as the second coefficient.

Further, the set algorithm includes a cluster algorithm, and determining, according to the algorithm parameter and in combination with the set algorithm, the identified radar target according to the algorithm output result includes the following:

Cluster analysis is performed according to the algorithm parameter corresponding to the each identification point to determine a cluster output by the set algorithm.

The cluster is determined as the radar target, where the cluster is in a one-to-one correspondence with the radar target.

Further, the algorithm parameter includes a neighborhood radius and a density threshold, and performing cluster analysis according to the algorithm parameter corresponding to the each identification point to determine the cluster output by the set algorithm includes the following:

Any identification point of the at least one identification point is determined as a first target point.

A first neighborhood radius and a first density threshold that correspond to the first target point are acquired, and in the case where the number of identification points within the range defined by the first neighborhood radius with the first target point as the center is greater than or equal to the first density threshold, a cluster is established; where the cluster includes the first target point and the identification points within the range defined by the first neighborhood radius with the first target point as the center.

The final size of the cluster is determined according to a neighborhood radius and a density threshold that correspond to each identification point within the range defined by the first neighborhood radius with the first target point as the center.

The cluster is output, any identification point other than the cluster is determined as the first target point, and the preceding step is performed: acquiring the first neighborhood radius and the first density threshold that correspond to the first target point and in the case where the number of identification points within the range defined by the first neighborhood radius with the first target point as the center is greater than or equal to the first density threshold, establishing the cluster until all identification points are traversed.

Further, determining the final size of the cluster according to the neighborhood radius and the density threshold that correspond to the each identification point within the range defined by the first neighborhood radius with the first target point as the center includes the following:

The identification points within the range defined by the first neighborhood radius with the first target point as the center are determined as second target points.

For each second target point of the second target points, a second neighborhood radius and a second density threshold that correspond to the each second target point are acquired, and in the case where the number of identification points within the range defined by the second neighborhood radius with the each second target point as the center is greater than or equal to the second density threshold, the identification points within the range defined by the second neighborhood radius with the each second target point as the center are added to the cluster until all the second target points are traversed.

According to another aspect of the present application, an apparatus for identifying a radar target is provided. The apparatus includes a radar data acquisition module, an algorithm parameter determination module, and a radar target determination module.

The radar data acquisition module is configured to acquire radar data of at least one identification point.

The algorithm parameter determination module is configured to determine an algorithm parameter corresponding to each identification point of the at least one identification point according to the radar data of the at least one identification point.

The radar target determination module is configured to determine, according to the algorithm parameter and in combination with a set algorithm, an identified radar target according to an algorithm output result.

Optionally, the radar data includes an amplitude and a detection distance.

Optionally, the algorithm parameter determination module is also configured to perform the steps below.

A first coefficient and a second coefficient that correspond to the each identification point are determined according to the amplitude and the detection distance of the at least one identification point.

An initial parameter value corresponding to the algorithm parameter is acquired.

The sum of the product of the first coefficient and the initial parameter value and the product of the second coefficient and the initial parameter value is determined as the algorithm parameter corresponding to the each identification point.

Optionally, the algorithm parameter determination module is also configured to perform the steps below.

For the each identification point, an amplitude and a detection distance that correspond to the each identification point are determined.

The maximum amplitude and the minimum amplitude among amplitudes of the at least one identification point are determined, and the first coefficient is determined according to the amplitude corresponding to the each identification point, the maximum amplitude, and the minimum amplitude.

The product of the detection distance that corresponds to the each identification point and a set scaling factor is determined as the second coefficient.

Optionally, the set algorithm includes a cluster algorithm, and the radar target determination module is also configured to perform the steps below.

Cluster analysis is performed according to the algorithm parameter corresponding to the each identification point to determine a cluster output by the set algorithm.

The cluster is determined as the radar target, where the cluster is in a one-to-one correspondence with the radar target.

Optionally, the algorithm parameter includes a neighborhood radius and a density threshold, and the radar target determination module is also configured to perform the steps below.

Any identification point of the at least one identification point is determined as a first target point.

A first neighborhood radius and a first density threshold that correspond to the first target point are acquired, and in the case where the number of identification points within the range defined by the first neighborhood radius with the first target point as the center is greater than or equal to the first density threshold, a cluster is established; where the cluster includes the first target point and the identification points within the range defined by the first neighborhood radius with the first target point as the center.

The final size of the cluster is determined according to a neighborhood radius and a density threshold that correspond to each identification point within the range defined by the first neighborhood radius with the first target point as the center.

The cluster is output, any identification point other than the cluster is determined as the first target point, and the preceding step is performed: acquiring the first neighborhood radius and the first density threshold that correspond to the first target point and in the case where the number of identification points within the range defined by the first neighborhood radius with the first target point as the center is greater than or equal to the first density threshold, establishing the cluster until all identification points are traversed.

Optionally, the radar target determination module is also configured to perform the steps below.

The identification points within the range defined by the first neighborhood radius with the first target point as the center are determined as second target points.

For each second target point of the second target points, a second neighborhood radius and a second density threshold that correspond to the each second target point are acquired, and in the case where the number of identification points within the range defined by the second neighborhood radius with the each second target point as the center is greater than or equal to the second density threshold, the identification points within the range defined by the second neighborhood radius with the each second target point as the center are added to the cluster until all the second target points are traversed.

According to another aspect of the present application, an electronic device is provided.

The electronic device includes at least one processor and a memory communicatively connected to the at least one processor.

The memory stores a computer program executable by the at least one processor. The computer program is configured to, when executed by the at least one processor, cause the at least one processor to execute the method for identifying a radar target described in any embodiment of the present application.

According to another aspect of the present application, a computer-readable storage medium is provided, which is configured to store computer instructions for implementing the method for identifying a radar target described in any embodiment of the present application when the computer instructions are executed by a processor.

In the method for identifying a radar target disclosed in the present application, radar data of at least one identification point is first acquired, then an algorithm parameter corresponding to each identification point is determined according to the radar data of the at least one identification point, and finally according to the algorithm parameter and in combination with a set algorithm, an identified radar target is determined according to an algorithm output result. The method for identifying a radar target provided by the present application solves the problem of target merging or splitting caused by fixed algorithm parameters in the related art by adaptively adjusting the size of algorithm parameters according to the radar data of identification points. The method can be applied to the identification of targets of different types and sizes, thereby improving the accuracy of target identification.

BRIEF DESCRIPTION OF DRAWINGS

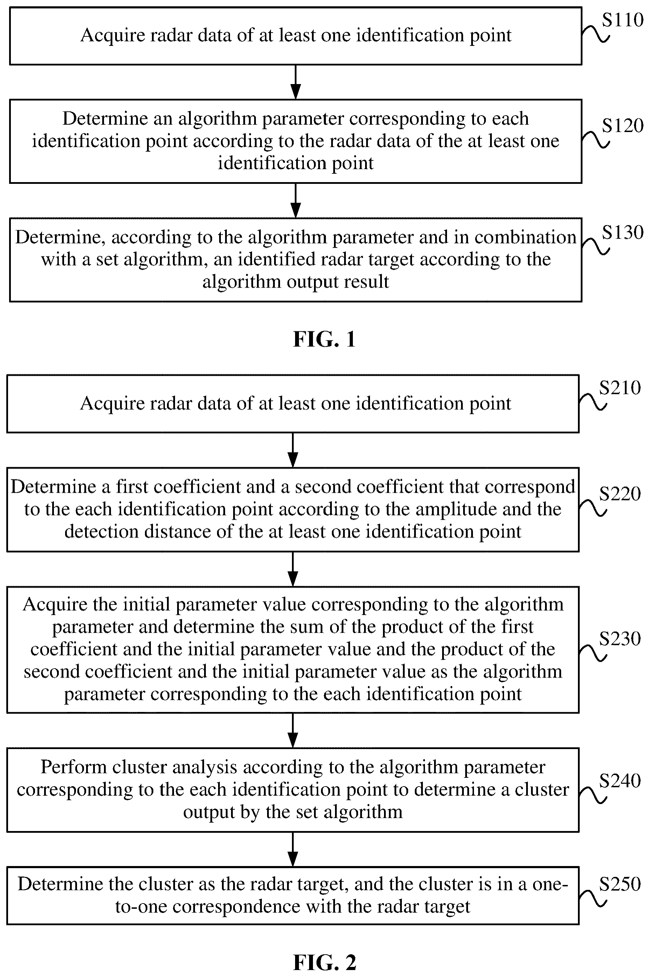

FIG. 1 is a flowchart of a method for identifying a radar target according to embodiment one of the present application.

FIG. 1 is a flowchart of a method for identifying a radar target according to embodiment two of the present application.

FIG. 3 is a diagram illustrating the structure of an apparatus for identifying a radar target according to embodiment three of the present application.

FIG. 4 is a diagram illustrating the structure of an electronic device for implementing a method for identifying a radar target according to embodiment four of the present application.

DETAILED DESCRIPTION

It is to be noted that terms such as "first" and "second" in the description, claims, and drawings of the present application are used to distinguish between similar objects and are not necessarily used to describe a particular order or sequence. It should be understood that the data used in this manner is interchangeable where appropriate so that the embodiments of the present application described herein may also be implemented in a sequence not illustrated or described herein. Additionally, terms "comprising", "including", and any other variations thereof are intended to encompass a non-exclusive inclusion. For example, a process, method, system, product, or device that includes a series of steps or units not only includes the expressly listed steps or units but may also include other steps or units that are not expressly listed or are inherent to such a process, method, product, or device.

Embodiment one

FIG. 1 is a flowchart of a method for identifying a radar target according to embodiment one of the present application. This embodiment is applicable to a situation where a radar device is used for target identification. The method may be executed by an apparatus for identifying a radar target. The apparatus may be implemented in the form of software and/or hardware and may be configured in an electronic device. As shown in FIG. 1, the method includes the steps below.

In S110, radar data of at least one identification point is acquired.

When radar is used for target identification, the radar emits electromagnetic waves outward, receives the reflected electromagnetic wave signals, and then determines the state of the target. However, a target may have multiple reflection points reflecting electromagnetic waves. Therefore, for the same target, the radar may identify electromagnetic wave signals of multiple points, each of which is an identification point. Radar data is point trace data obtained by the analysis and processing of the electromagnetic wave signals emitted and received by the radar, such as amplitudes and distances corresponding to identification points.

Optionally, millimeter-wave radar is usually used for target identification in the field of vehicle assisted driving. The millimeter-wave radar works in the millimeter wave-band for detection. The frequency domain of the millimeter wave is usually 30 - 300 GHz (wavelength is 1 - 10 mm). The wavelength of the millimeter wave is between the microwave and the centimeter wave, so the millimeter-wave radar has some advantages of both microwave radar and photoelectric radar.

In this embodiment, the method of acquiring the radar data of the at least one identification point may be as follows: A vehicle-mounted millimeter-wave radar device is used to send and receive electromagnetic waves, and then the electromagnetic wave signals are analyzed and processed to obtain radar data of at least one identification point corresponding to a nearby target.

In S120, an algorithm parameter corresponding to each identification point is determined according to the radar data of the at least one identification point.

In this embodiment, to accurately distinguish the target objects corresponding to identification points, it is necessary to process the acquired radar data through an algorithm to determine a target object to which each identification point belongs. Since the radar cross-sections (RCSs) corresponding to target objects of different types and sizes are different, the radar data of each identification point is also different. Therefore, when the algorithm is used to process the radar data of each identification point, the corresponding algorithm parameters can be adaptively adjusted according to the radar data of each identification point to achieve dynamic detection, so that analysis can be conducted more accurately.

Optionally, a cluster algorithm is used as an example. When radar data is processed using the cluster algorithm, the corresponding algorithm parameters are a neighborhood radius and a density threshold. Based on these parameters, the algorithm may output one or more clusters, and each cluster may be considered as a target object. When the corresponding neighborhood radius and density threshold are adaptively determined according to the radar data of each identification point, the clusters output by the algorithm can be more accurate, thereby avoiding the merging or splitting of the target caused by fixed algorithm parameters.

In S130, according to the algorithm parameter and in combination with a set algorithm, an identified radar target is determined according to an algorithm output result.

In this embodiment, after an algorithm parameter corresponding to each identification point is determined, a corresponding algorithm is used for calculation, the radar data is used as an input variable to obtain the output result of the algorithm, and then an identified radar target can be determined according to the algorithm output result.

In the method for identifying a radar target disclosed in the embodiment of the present application, radar data of at least one identification point is first acquired, then an algorithm parameter corresponding to each identification point is determined according to the radar data of the at least one identification point, and finally according to the algorithm parameter and in combination with a set algorithm, an identified radar target is determined according to an algorithm output result. The method for identifying a radar target provided by the embodiment of the present application solves the problem of target merging or splitting caused by fixed algorithm parameters in the related art by adaptively adjusting the size of algorithm parameters according to the radar data of identification points. The method can be applied to the identification of targets of different types and sizes, thereby improving the accuracy of target identification.

Embodiment two

FIG. 2 is a flowchart of a method for identifying a radar target according to embodiment two of the present application. This embodiment is a refinement of the preceding embodiment. As shown in FIG. 2, the method includes the steps below.

In S210, radar data of at least one identification point is acquired.

In the embodiment, when radar is used for target identification, the radar emits electromagnetic waves outward, receives the reflected electromagnetic wave signals, and then determines the state of the target. However, a target may have multiple reflection points reflecting electromagnetic waves. Therefore, for the same target, the radar may identify electromagnetic wave signals of multiple points, each of which is an identification point. Radar data is point trace data obtained by the analysis and processing of the electromagnetic wave signals emitted and received by the radar, such as amplitudes and distances corresponding to identification points.

Optionally, the radar data includes an amplitude and a detection distance, and the method of acquiring the radar data of the at least one identification point may be as follows: A sending and receiving of electromagnetic waves are performed by the radar device, and then the electromagnetic wave signals are analyzed and processed to obtain an amplitude and a detection distance corresponding to each of at least one identification point corresponding to a nearby target.

In S220, a first coefficient and a second coefficient that correspond to the each identification point are determined according to the amplitude and the detection distance of the at least one identification point.

The first coefficient and the second coefficient are correlation coefficients with the algorithm parameters used for radar data processing. By the determination of the first coefficient and the second coefficient, an algorithm parameter corresponding to each identification point may be determined.

Optionally, the method of determining the first coefficient and the second coefficient that correspond to the each identification point according to the amplitude and the detection distance of the at least one identification point may be as follows: For the each identification point, an amplitude and a detection distance that correspond to the each identification point are determined. The maximum amplitude and the minimum amplitude among amplitudes of the at least one identification point are determined, and the first coefficient is determined according to the amplitude corresponding to the each identification point, the maximum amplitude, and the minimum amplitude. The product of the detection distance that corresponds to the each identification point and a set scaling factor is determined as the second coefficient.

Specifically, it is assumed that N identification points are collected using a radar device, and amplitudes and detection distances of the points are recorded as $\{A_1, A_2, ..., A_N\}$ and $\{D_1, D_2, \cdots, D_N\}$. The maximum amplitude $A_{max}$ and the minimum amplitude $A_{min}$ of the points can be found by the comparison of the amplitudes of the points. For any identification point $i$ $(i = 1, 2, ... N)$, the corresponding first coefficient may be represented as follows:

$$a_i = cor_1 \times \frac{A_i - A_{min}}{A_{max} - A_{min}}.$$

The second coefficient may be represented as follows:

$$b_i = cor_2 \times D_i.$$

In the formulas, $cor_1$ and $cor_2$ are scaling factors.

In S230, an initial parameter value corresponding to the algorithm parameter is acquired, and the sum of the product of the first coefficient and the initial parameter value and the product of the second coefficient and the initial parameter value is determined as the algorithm parameter corresponding to the each identification point.

In this embodiment, by the initialization of the algorithm, a parameter initial value can be obtained. Then, in combination with the first coefficient and the second coefficient that correspond to the each identification point and are determined in the previous step, an algorithm parameter corresponding to the each identification point can be determined.

Optionally, a cluster algorithm is used as an example. The algorithm parameters related to the cluster algorithm are a neighborhood radius and a density threshold, which are denoted by *Eps* and *minPts,* respectively. Through the initialization operation, the initial neighborhood radius and the initial density threshold can be obtained, which are denoted by $R_{-eps}$ and $T_{-pts}$, respectively. Then, for any identification point $i$ $(i = 1, 2, ... N)$, the corresponding neighborhood radius may be expressed as follows:

$$Eps_i = a_i \times R_{-eps} + b_i \times R_{-eps}.$$

The density threshold may be expressed as follows:

$$minPts_i = a_i \times T_{-pts} + b_i \times T_{-pts}.$$

In S240, cluster analysis is performed according to the algorithm parameter corresponding to the each identification point to determine a cluster output by the set algorithm.

The set algorithm includes a cluster algorithm. The cluster algorithm is a statistical analysis method for studying (sample or indicator) classification problems and is also an important algorithm for data mining. Cluster analysis is composed of several patterns. Usually, a pattern is a vector of measurement or a point in multidimensional space. The cluster analysis is based on similarity. Patterns in one cluster have more similarities than patterns in different clusters.

Optionally, the DBSCAN cluster algorithm in the cluster algorithm may be used for data processing. DBSCAN (Density-based spatial clustering of applications with noise) is a relatively representative density-based cluster algorithm. Unlike partitioning and hierarchical clustering methods, DBSCAN defines a cluster as the largest set of density-connected points, can divide areas with sufficiently high density into clusters, and can find clusters of any shape in a spatial database of noise.

In this embodiment, the radar data of each identification point is processed by the cluster algorithm, and the output of the algorithm is one or more clusters. In the cluster analysis, an algorithm parameter corresponding to each identification point is adaptively determined according to the radar data of each point.

Optionally, the algorithm parameter includes a neighborhood radius and a density threshold, and the method of performing cluster analysis according to the algorithm parameter corresponding to the each identification point to determine the cluster output by the set algorithm may be as follows: Any identification point of the at least one identification point is determined as a first target point. A first neighborhood radius and a first density threshold that correspond to the first target point are acquired, and in the case where the number of identification points within the range defined by the first neighborhood radius with the first target point as the center is greater than or equal to the first density threshold, a cluster is established, where the cluster includes the first target point and the identification points within the range defined by the first neighborhood radius with the first target point as the center. The final size of the cluster is determined according to a neighborhood radius and a density threshold that correspond to each identification point within the range defined by the first neighborhood radius with the first target point as the center. The cluster is output, any identification point other than the cluster is determined as the first target point, and the preceding step is performed: acquiring the first neighborhood radius and the first density threshold that correspond to the first target point and in the case where the number of identification points within the range defined by the first neighborhood radius with the first target point as the center is greater than or equal to the first density threshold, establishing the cluster until all identification points are traversed.

Further, the method of determining the final size of the cluster according to the neighborhood radius and the density threshold that correspond to the each identification point within the range defined by the first neighborhood radius with the first target point as the center may be as follows: The identification points within the range defined by the first neighborhood radius with the first target point as the center are determined as second target points. For each second target point of the second target points, a second neighborhood radius and a second density threshold that correspond to the each second target point are acquired, and in the case where the number of identification points within the range defined by the second neighborhood radius with the each second target point as the center is greater than or equal to the second density threshold, the identification points within the range defined by the second neighborhood radius with the each second target point as the center are added to the cluster until all the second target points are traversed.

Specifically, for the obtained N identification points, each point may be first marked as an unvisited object. In other words, the flag information of each point may be as follows: flag = "unvisited". One identification point $i$ ($i$ = 1, 2, ... N) of the identification points is selected as a first target point that is marked as a visited object, that is, $flag_i$ = "visited". The neighborhood radius and density threshold of the visited object are acquired respectively, that is, $Eps_i$ and $minPts_i$, where $Eps_i = a_i \times R_{-eps} + b_i \times R_{-eps}$ and $minPts_i = a_i \times T_{-pts} + b_i \times T_{-pts}$. If the number of identification points in the circle with the first target point i as the center and $Eps_i$ as the radius is greater than or equal to $minPts_i$, a new cluster $M$ is created, and the first target point i and the identification points within the range defined by the neighborhood radius $Eps_i$ are all added to the $M$ cluster; if the number of target points in the circle with the first target point i as the center and $Eps_i$ as the radius is less than $minPts_i$, the first target point i is marked as a noise point.

It is assumed that $K$ identification points are in an $M$ cluster. For one identification point $j$ of the $K$ identification points, it is determined whether the flag information $flag_j$ of $j$ is equal to "unvisited". If so, the identification point $j$ is used as a second target point, that $flag_j$ = "visited" is set, and the neighborhood radius and density threshold of $j$ are determined as $Eps_j$ and $minPts_j$, respectively; if not, a point with the flag information "unvisited" is searched in the $M$ cluster again. $Eps_j = a_j \times R_{-eps} + b_j \times R_{-eps}$, and $minPts_j = a_j \times T_{-pts} + b_i \times T_{-pts}$. It is determined whether the number of identification points within the range defined by the neighborhood radius $Eps_j$ with the second target point $j$ as the center is greater than $minPts_j$. If so, the points in the neighborhood are added to the $M$ cluster. All $K$ identification points are traversed until all points in the $M$ cluster are marked as "visited", and the $M$ cluster is output; any identification point outside the $M$ cluster is re-determined as the first target point, and the preceding step of the cluster establishment operation is performed until all $N$ identification points are marked as "visited".

In S250, the cluster is determined as the radar target, where the cluster is in a one-to-one correspondence with the radar target.

In this embodiment, the output result of the cluster algorithm is one or more clusters, and each cluster corresponds to a radar target. Through the preceding steps, the identification points belonging to different target objects can be distinguished, and the identification points belonging to the same target object can be unified to determine the target finally identified by the radar.

In the method for identifying a radar target disclosed in the embodiment of the present application, radar data of at least one identification point is first acquired; then a first coefficient and a second coefficient that correspond to each identification point are determined according to the amplitude and the detection distance of the at least one identification point; afterwards, an initial parameter value corresponding to the algorithm parameter is acquired, and the sum of the product of the first coefficient and the initial parameter value and the product of the second coefficient and the initial parameter value is determined as the algorithm parameter corresponding to the each identification point; cluster analysis is performed according to the algorithm parameter corresponding to the each identification point to determine a cluster output by the set algorithm; finally, the cluster is determined as the radar target, where the cluster is in a one-to-one correspondence with the radar target. The method for identifying a radar target provided by the embodiment of the present application adopts a cluster algorithm to analyze radar data and adaptively adjusts the size of the neighborhood radius and the density threshold according to the radar data of each identification point, thus solving the problem of target merging or splitting caused by fixed algorithm parameters in the related art. The method can be applied to the identification of targets of different types and sizes, thereby improving the accuracy of target identification.

Embodiment three

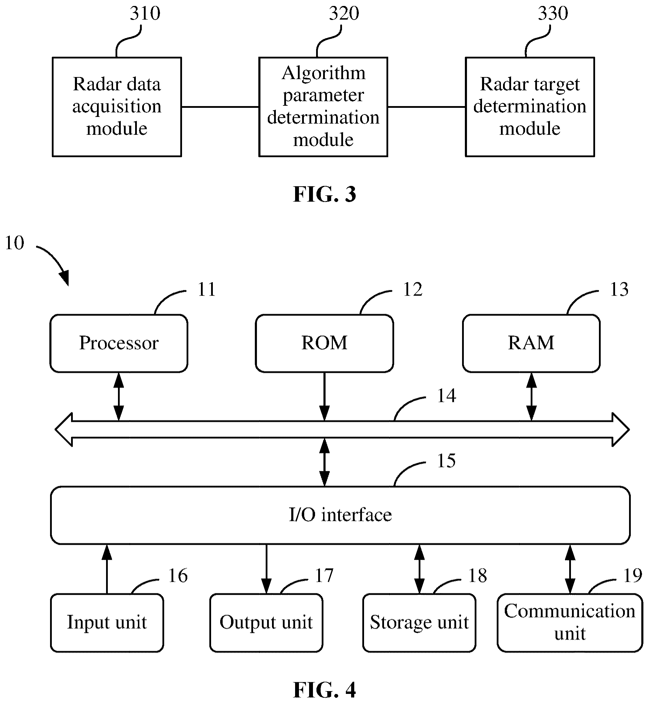

FIG. 3 is a diagram illustrating the structure of an apparatus for identifying a radar target according to embodiment three of the present application. As shown in FIG. 3, the apparatus includes a radar data acquisition module 310, an algorithm parameter determination module 320, and a radar target determination module 330.

The radar data acquisition module 310 is configured to acquire radar data of at least one identification point.

The algorithm parameter determination module 320 is configured to determine an algorithm parameter corresponding to each identification point of the at least one identification point according to the radar data of the at least one identification point.

The radar target determination module 330 is configured to determine, according to the algorithm parameter and in combination with a set algorithm, an identified radar target according to an algorithm output result.

Optionally, the radar data includes an amplitude and a detection distance.

Optionally, the algorithm parameter determination module 320 is also configured to perform the steps below.

A first coefficient and a second coefficient that correspond to the each identification point are determined according to the amplitude and the detection distance of the at least one identification point; an initial parameter value corresponding to the algorithm parameter is acquired, and the sum of the product of the first coefficient and the initial parameter value and the product of the second coefficient and the initial parameter value is determined as the algorithm parameter corresponding to the each identification point.

Optionally, the algorithm parameter determination module 320 is also configured to perform the steps below.

For the each identification point, an amplitude and a detection distance that correspond to the each identification point are determined. The maximum amplitude and the minimum amplitude among amplitudes of the at least one identification point are determined, and the first coefficient is determined according to the amplitude corresponding to the each identification point, the maximum amplitude, and the minimum amplitude. The product of the detection distance that corresponds to the each identification point and a set scaling factor is determined as the second coefficient.

Optionally, the set algorithm includes a cluster algorithm, and the radar target determination module 330 is also configured to perform the steps below.

Cluster analysis is performed according to the algorithm parameter corresponding to the each identification point to determine a cluster output by the set algorithm. The cluster is determined as the radar target, where the cluster is in a one-to-one correspondence with the radar target.

Optionally, the algorithm parameter includes a neighborhood radius and a density threshold, and the radar target determination module 330 is also configured to perform the steps below.

Any identification point of the at least one identification point is determined as a first target point. A first neighborhood radius and a first density threshold that correspond to the first target point are acquired, and in the case where the number of identification points within the range defined by the first neighborhood radius with the first target point as the center is greater than or equal to the first density threshold, a cluster is established; where the cluster includes the first target point and the identification points within the range defined by the first neighborhood radius with the first target point as the center. The final size of the cluster is determined according to a neighborhood radius and a density threshold that correspond to each identification point within the range defined by the first neighborhood radius with the first target point as the center. The cluster is output, any identification point other than the cluster is determined as the first target point, and the preceding step is performed: acquiring the first neighborhood radius and the first density threshold that correspond to the first target point and in the case where the number of identification points within the range defined by the first neighborhood radius with the first target point as the center is greater than or equal to the first density threshold, establishing the cluster until all identification points are traversed.

Optionally, the radar target determination module 330 is also configured to perform the steps below.

The identification points within the range defined by the first neighborhood radius with the first target point as the center are determined as second target points. For each second target point of the second target points, a second neighborhood radius and a second density threshold that correspond to the each second target point are acquired, and in the case where the number of identification points within the range defined by the second neighborhood radius with the each second target point as the center is greater than or equal to the second density threshold, the identification points within the range defined by the second neighborhood radius with the each second target point as the center are added to the cluster until all the second target points are traversed.

The apparatus for identifying a radar target provided by the embodiment of the present application may execute the method for identifying a radar target provided by any embodiment of the present application and has corresponding functional modules and beneficial effects for executing the method.

Embodiment four

FIG. 4 is a diagram illustrating the structure of an electronic device 10 that can implement the embodiment of the present application. The electronic device is intended to represent various forms of digital computers, for example, a laptop computer, a desktop computer, a worktable, a personal digital assistant, a server, a blade server, a mainframe computer, or another applicable computer. The electronic device may also represent various forms of mobile apparatuses such as a personal digital processing apparatus, a cellular phone, a smart phone, a wearable device (for example, a helmet, glasses, and a watch), and another similar computing apparatus. The components shown herein, their connections and relationships, and their functions are by way of examples only and are not intended to limit implementations of the present application described and/or claimed herein.

As shown in FIG. 4, the electronic device 10 includes at least one processor 11 and a memory in a communication connection with the at least one processor 11, such as a read-only memory (ROM) 12 and a random-access memory (RAM) 13. The memory stores a computer program executable by the at least one processor. The processor 11 may perform various appropriate actions and processes according to computer programs stored in the ROM 12 or loaded from a storage unit 18 into the RAM 13. The RAM 13 may also store various programs and data required for the operation of the electronic device 10. The processor 11, the ROM 12, and the RAM 13 are connected to each other through a bus 14. An input/output (I/O) interface 15 is also connected to the bus 14.

Multiple components in the electronic device 10 are connected to the I/O interface 15, including an input unit 16, such as a keyboard or a mouse; an output unit 17, such as various types of displays or speakers; a storage unit 18, such as a magnetic disk or an optical disk; and a communication unit 19, such as a network card, a modem, or a wireless communication transceiver. The communication unit 19 allows the electronic device 10 to exchange information/data with other devices through a computer network such as the Internet and/or various telecommunication networks.

The processor 11 may be various general-purpose and/or special-purpose processing components having processing and computing capabilities. Some examples of the processor 11 include but are not limited to, a central processing unit (CPU), a graphics processing unit (GPU), various dedicated artificial intelligence (AI) computing chips, various processors running machine learning model algorithms, a digital signal processor (DSP), and any suitable processors, controllers, and microcontrollers. The processor 11 performs various methods and processes described above, such as the method for identifying a radar target.

In some embodiments, the method for identifying a radar target may be implemented as a computer program tangibly embodied in a computer-readable storage medium such as the storage unit 18. In some embodiments, part or all of the computer program may be loaded and/or installed on the electronic device 10 via the ROM 12 and/or the communication unit 19. When the computer program is loaded into the RAM 13 and executed by the processor 11, one or more steps of the method for identifying a radar target described above may be performed. Optionally, in other embodiments, the processor 11 may be configured to perform the method for identifying a radar target by any other suitable means (for example, by means of firmware).

Various implementations of the systems and techniques described above herein may be implemented in digital electronic circuitry, integrated circuitry, a field programmable gate array (FPGA), an application specific integrated circuit (ASIC), an application specific standard product (ASSP), a system on chip (SOC), a complex programmable logic device (CPLD), a computer hardware, a firmware, a software, and/or combinations thereof. The various implementations may include an implementation in one or more computer programs that may be executable and/or interpretable on a programmable system including at least one programmable processor. The programmable processor may be special-purpose or general-purpose for receiving data and instructions from a memory system, at least one input apparatus, and at least one output apparatus and transmitting the data and instructions to the memory system, the at least one input apparatus, and the at least one output apparatus.

The computer program for implementing the method of the present application may be written in any combination of one or more programming languages. These computer programs may be provided to a processor of a general-purpose computer, special-purpose computer, or other programmable data processing apparatus such that the computer programs, when executed by the processor, causes the functions/operations specified in flowcharts and/or block diagrams to be implemented. The computer program may be executed entirely or partly on the machine, as a stand-alone software package partly on the machine and partly on a remote machine, or entirely on the remote machine or server.

In the context of the present application, a computer-readable storage medium may be a tangible medium that may contain or store a computer program for use by or in conjunction with an instruction execution system, apparatus, or device. The computer-readable storage medium may include, but is not limited to, electronic, magnetic, optical, electromagnetic, infrared, or semiconductor systems, apparatuses, or devices, or any suitable combination thereof. Optionally, the computer-readable storage medium may be a machine-readable signal medium. Examples of the machine-readable storage medium may include an electrical connection based on one or more wires, a portable computer disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device, or any appropriate combination thereof.

To provide interaction with a user, the systems and techniques described herein may be implemented on an electronic device. The electronic device has a display apparatus (for example, CRT (cathode ray tube) or LCD (liquid crystal display) monitor) for displaying information to the user; and a keyboard and pointing apparatus (for example, a mouse or a trackball) through which a user can provide input to the electronic device. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware, or front-end components. Components of a system may be interconnected by any form or medium of digital data communication (for example, a communication network). Examples of the communication network include a local area network (LAN), a wide area network (WAN), a blockchain network, and the Internet.

The computing system may include a client and a server. A client and a server are generally remote from each other and typically interact through a communication network. The relationship between the client and the server arises by virtue of computer programs running on respective computers and having a client-server relationship to each other. The server, which may be a cloud server and is also referred to as a cloud computing server or a cloud host, is a host product in a cloud computing service system. The server solves the problems of difficult management and weak service scalability in the service of a traditional physical host and a traditional related VPS.

It is to be understood that various forms of processes shown above may be adopted with steps reordered, added, or deleted. For example, the steps described in the present application may be performed in parallel, sequentially, or in different orders, as long as the desired results of the technical solutions of the present application can be achieved, and no limitation is imposed herein.

The preceding embodiments do not limit the scope of the present application. It is to be understood by those skilled in the art that various modifications, combinations, sub-combinations, and substitutions may be performed according to design requirements and other factors. Any modifications, equivalent substitutions, improvements and the like made within the spirit and principle of the present application should fall within the scope of the present application.

## Claims

1. A method for identifying a radar target, comprising:

   acquiring radar data of at least one identification point;
   determining an algorithm parameter corresponding to each identification point of the at least one identification point according to the radar data of the at least one identification point; and
   determining, according to the algorithm parameter and in combination with a set algorithm, an identified radar target according to an algorithm output result.

2. The method of claim 1, wherein the radar data comprises an amplitude and a detection distance.

3. The method of claim 2, wherein determining the algorithm parameter corresponding to the each identification point according to the radar data of the at least one identification point comprises:

   determining a first coefficient and a second coefficient that correspond to the each identification point according to the amplitude and the detection distance of the at least one identification point;
   acquiring an initial parameter value corresponding to the algorithm parameter; and
   determining a sum of a product of the first coefficient and the initial parameter value and a product of the second coefficient and the initial parameter value as the algorithm parameter corresponding to the each identification point.

4. The method of claim 3, wherein determining the first coefficient and the second coefficient that correspond to the each identification point according to the amplitude and the detection distance of the at least one identification point comprises:

determining, for the each identification point, an amplitude and a detection distance that correspond to the each identification point;

determining a maximum amplitude and a minimum amplitude among amplitudes of the at least one identification point, and determining the first coefficient according to the amplitude corresponding to the each identification point, the maximum amplitude, and the minimum amplitude; and

determining a product of the detection distance that corresponds to the each identification point and a set scaling factor as the second coefficient.

5. The method of claim 1, wherein the set algorithm comprises a cluster algorithm, and determining, according to the algorithm parameter and in combination with the set algorithm, the identified radar target according to the algorithm output result comprises:

performing cluster analysis according to the algorithm parameter corresponding to the each identification point to determine a cluster output by the set algorithm; and

determining the cluster as the radar target, wherein the cluster is in a one-to-one correspondence with the radar target.

6. The method of claim 5, wherein the algorithm parameter comprises a neighborhood radius and a density threshold, and performing cluster analysis according to the algorithm parameter corresponding to the each identification point to determine the cluster output by the set algorithm comprises:

determining any identification point of the at least one identification point as a first target point;

acquiring a first neighborhood radius and a first density threshold that correspond to the first target point, and in a case where a number of identification points within a range defined by the first neighborhood radius with the first target point as a center is greater than or equal to the first density threshold, establishing a cluster; wherein the cluster comprises the first target point and the identification points within the range defined by the first neighborhood radius with the first target point as the center;

determining a final size of the cluster according to a neighborhood radius and a density threshold that correspond to each identification point within the range defined by the first neighborhood radius with the first target point as the center; and

outputting the cluster, determining any identification point other than the cluster as the first target point, and returning to perform the step of acquiring the first neighborhood radius and the first density threshold that correspond to the first target point and in the case where the number of identification points within the range defined by the first neighborhood radius with the first target point as the center is greater than or equal to the first density threshold, establishing the cluster until all identification points are traversed.

7. The method of claim 6, wherein determining the final size of the cluster according to the neighborhood radius and the density threshold that correspond to the each identification point within the range defined by the first neighborhood radius with the first target point as the center comprises:

determining the identification points within the range defined by the first neighborhood radius with the first target point as the center as second target points; and

acquiring, for each second target point of the second target points, a second neighborhood radius and a second density threshold that correspond to the each second target point, and in a case where a number of identification points within a range defined by the second neighborhood radius with the each second target point as a center is greater than or equal to the second density threshold, adding the identification points within the range defined by the second neighborhood radius with the each second target point as the center to the cluster until all the second target points are traversed.

8. An apparatus for identifying a radar target, comprising:

a radar data acquisition module configured to acquire radar data of at least one identification point;

an algorithm parameter determination module configured to determine an algorithm parameter corresponding to each identification point of the at least one identification point according to the radar data of the at least one identification point; and

a radar target determination module configured to determine, according to the algorithm parameter and in combination with a set algorithm, an identified radar target according to an algorithm output result.

9. An electronic device, comprising:

at least one processor; and
a memory communicatively connected to the at least one processor;

wherein the memory stores a computer program executable by the at least one processor, and the computer program is configured to, when executed by the at least one processor, cause the at least one processor to execute the method for identifying a radar target of any one of claims 1 to 7.

10. A computer-readable storage medium storing computer instructions that, when executed by a processor, cause the at least one processor to execute the method for identifying a radar target of any one of claims 1 to 7.

Acquire radar data of at least one identification point $\quad$ S110

Determine an algorithm parameter corresponding to each identification point according to the radar data of the at least one identification point $\quad$ S120

Determine, according to the algorithm parameter and in combination with a set algorithm, an identified radar target according to the algorithm output result $\quad$ S130

## FIG. 1

Acquire radar data of at least one identification point $\quad$ S210

Determine a first coefficient and a second coefficient that correspond to the each identification point according to the amplitude and the detection distance of the at least one identification point $\quad$ S220

Acquire the initial parameter value corresponding to the algorithm parameter and determine the sum of the product of the first coefficient and the initial parameter value and the product of the second coefficient and the initial parameter value as the algorithm parameter corresponding to the each identification point $\quad$ S230

Perform cluster analysis according to the algorithm parameter corresponding to the each identification point to determine a cluster output by the set algorithm $\quad$ S240

Determine the cluster as the radar target, and the cluster is in a one-to-one correspondence with the radar target $\quad$ S250

## FIG. 2

310

320

330

| Radar data acquisition module | Algorithm parameter determination module | Radar target determination module |

**FIG. 3**

10

11

Processor

12

ROM

13

RAM

14

15

I/O interface

16

Input unit

17

Output unit

18

Storage unit

19

Communication unit

**FIG. 4**

## INTERNATIONAL SEARCH REPORT

| International application No. |
| --- |
| **PCT/CN2023/122508** |

| A. | CLASSIFICATION OF SUBJECT MATTER |
| --- | --- |

G01S7/41(2006.01)i

According to International Patent Classification (IPC) or to both national classification and IPC

| B. | FIELDS SEARCHED |
| --- | --- |

Minimum documentation searched (classification system followed by classification symbols)

IPC: G01S7

Documentation searched other than minimum documentation to the extent that such documents are included in the fields searched

Electronic data base consulted during the international search (name of data base and, where practicable, search terms used)

CNTXT, ENTXTC, ENTXT, VEN, CJFD, CNKI, IEEE: 雷达, 目标, 识别, 检测, 自适应, 聚类, 密度, 参数, 幅值, 反射强度, 探测距离, 邻域半径, 第一系数, 第二系数, DBSCAN, radar, target, identify, detect, adaptive, clustering, density, parameter, amplitude, reflection intensity, neighborhood radius, first coefficient, second coefficient

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116299291 A (HUIZHOU DESAY SV AUTOMOTIVE CO., LTD.) 23 June 2023 (2023-06-23) claims 1-10 | 1-10 |
| X | CN 115439484 A (SUZHOU ZHITO TECHNOLOGY CO., LTD.) 06 December 2022 (2022-12-06) description, paragraphs 6-9, 62-63 and 70-72 | 1-3, 5-10 |
| X | US 2021216814 A1 (APTIV TECHNOLOGIES LTD.) 15 July 2021 (2021-07-15) description, paragraphs 17 and 24-31, and figures 1-3 | 1-2, 5-10 |
| X | CN 108256577 A (SOUTHEAST UNIVERSITY) 06 July 2018 (2018-07-06) description, paragraph 12, and figure 2 | 1-2, 5-10 |
| X | CN 109948635 A (BEIJING VANJEE TECHNOLOGY CO., LTD.) 28 June 2019 (2019-06-28) description, paragraphs 5-18 | 1-2, 5-10 |
| X | CN 112313538 A (SZ DJI TECHNOLOGY CO., LTD.) 02 February 2021 (2021-02-02) description, paragraphs 43-45 and 74-84, and figure 1 | 1-2, 5-10 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **12 December 2023** | **21 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/122508** |

## C.    DOCUMENTS CONSIDERED TO BE RELEVANT

| Category* | Citation of document, with indication, where appropriate, of the relevant passages | Relevant to claim No. |
| --- | --- | --- |
| A | CN 112394334 A (FUJITSU LIMITED) 23 February 2021 (2021-02-23)<br>entire document | 1-10 |
| A | CN 114398996 A (GUANGDONG HAOXING TECHNOLOGY CO., LTD.) 26 April 2022 (2022-04-26)<br>entire document | 1-10 |
| A | 宋金玉等 (SONG, Jinyu et al.). "DBSCAN聚类算法的参数配置方法研究 (Research on Parameter Configuration Method of DBSCAN Clustering Algorithm)"<br>计算机研究与发展 (Computer Technology and Development),<br>Vol. 29, No. 5, 31 May 2019 (2019-05-31), pp. 44-48<br>ISSN: 1673-629X,<br>    entire document | 1-10 |

Form PCT/ISA/210 (second sheet) (July 2022)

**INTERNATIONAL SEARCH REPORT**
Information on patent family members

International application No.

**PCT/CN2023/122508**

| Patent document cited in search report | | | Publication date (day/month/year) | Patent family member(s) | | | Publication date (day/month/year) |
|---|---|---|---|---|---|---|---|
| CN | 116299291 | A | 23 June 2023 | None | | | |
| CN | 115439484 | A | 06 December 2022 | CN | 115439484 | B | 21 March 2023 |
| US | 2021216814 | A1 | 15 July 2021 | DE | 102021100351 | A1 | 15 July 2021 |
| | | | | US | 11403482 | B2 | 02 August 2022 |
| | | | | US | 2022366185 | A1 | 17 November 2022 |
| | | | | CN | 113128551 | A | 16 July 2021 |
| CN | 108256577 | A | 06 July 2018 | CN | 108256577 | B | 28 September 2021 |
| CN | 109948635 | A | 28 June 2019 | CN | 109948635 | B | 27 April 2021 |
| CN | 112313538 | A | 02 February 2021 | WO | 2021087760 | A1 | 14 May 2021 |
| CN | 112394334 | A | 23 February 2021 | JP | 2021034025 | A | 01 March 2021 |
| CN | 114398996 | A | 26 April 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310331724